# EUROPEAN PATENT APPLICATION

(11) **EP 3 085 815 A1**
(43) Date of publication of application: **26.10.2016**
(21) Application number: 14872633.4
(22) Date of filing: 16.12.2014
(51) Int. Cl.: C25B 13/08, C08J 9/28, C25B 9/00

(54) **DIAPHRAGM FOR ALKALINE WATER ELECTROLYSIS, METHOD FOR PRODUCING SAME, AND ALKALINE WATER ELECTROLYSIS APPARATUS**

(30) Priority: 18.12.2013 JP 2013261099
(71) Applicant: Kawasaki Jukogyo Kabushiki Kaisha, Kobe-shi, Hyogo 650-8670 (JP); De Nora Permelec Ltd., Kanagawa 252-0816 (JP); Thyssenkrupp Uhde Chlorine Engineers (Japan) Ltd., Chuo-ku Tokyo 1030025 (JP)
(72) Inventor: KAMEI, Yuji, Hyogo 673-8666 (JP); TAGUCHI, Koki, Hyogo 673-8666 (JP); SHIMOMURA, Ikuo, Hyogo 673-8666 (JP); ITO, Takafumi, Hyogo 673-8666 (JP); KAWAGUCHI, Jun, Hyogo 673-8666 (JP); TAKASE, Tomonori, Hyogo 673-8666 (JP); KATO, Akihiro, Kanagawa 252-0816 (JP); MANABE, Akiyoshi, Kanagawa 252-0816 (JP); HASHIMOTO, Terumi, Okayama 706-0134 (JP)
(74) Representative: Matthews, Derek Peter
(86) International application number: PCT/JP2014/006278
(87) International publication number: WO 2015/093047

(57) **Abstract**

An alkaline water electrolysis diaphragm 90 includes: a polymer porous layer 91 containing at least one polymer compound selected from polyether sulfone having a contact angle of 20 to 90° and polysulfone having the contact angle of 20 to 90°; and an organic fiber fabric layer 92 coupled to the polymer porous layer 91. The polyether sulfone having the contact angle of 20 to 90° is at least one polymer compound selected from the group consisting of polyether sulfone, hydrophilic polyether sulfone, cationic polyether sulfone, and cationic hydrophilic polyether sulfone. The polysulfone having the contact angle of 20 to 90° is at least one polymer compound selected from the group consisting of polysulfone, hydrophilic polysulfone, cationic polysulfone, and cationic hydrophilic polysulfone.

## Description

### Technical Field

The present invention relates to an alkaline water electrolyzer, an alkaline water electrolysis diaphragm, and a method of manufacturing the alkaline water electrolysis diaphragm.

### Background Art

An alkaline water electrolyzer configured to generate oxygen and hydrogen from water has been known. Typically, the alkaline water electrolyzer includes one or more electrolysis units. For example, the electrolysis unit of the alkaline water electrolyzer described in PTL 1 includes: an electrolysis tank; an alkali aqueous solution, such as a potassium hydroxide (KOH) aqueous solution, stored in the electrolysis tank; two mesh-like electrodes immersed in the alkali aqueous solution; a diaphragm held so as to be sandwiched between the two electrodes and having ion permeability; two power supply electrodes configured to supply electric power to the respective electrodes; and plate spring-shaped electrically-conductive members through which the power supply electrodes are electrically connected to the electrodes. In the alkaline water electrolyzer, when a voltage is applied between the electrodes by supplying the electric power from the power supply electrodes through the electrically-conductive members to the electrodes, hydrogen is generated at a cathode side of the electrolysis tank, and oxygen is generated at an anode side of the electrolysis tank.

Examples of a conventionally-proposed electrolysis diaphragm include: asbestos; non-woven fabric; an ion-exchange membrane; a polymer porous membrane; and a composite membrane containing inorganic substance and organic polymer. For example, PTL 1 describes an ion-permeable diaphragm formed by containing organic fiber fabric in a mixture of: a hydrophilic inorganic material that is a calcium phosphate compound or calcium fluoride; and an organic binding material selected from polysulfone, polypropylene, and polyvinylidene fluoride. Further, for example, PTL 2 describes an ion-permeable diaphragm formed by containing extended organic fiber fabric in a membrane forming mixture of: a particulate inorganic hydrophilic material selected from antimony, zirconium oxide, and zirconium hydroxide; and an organic binding agent selected from fluorocarbon polymer, polysulfone, polypropylene, polyvinyl chloride, and polyvinylbutyral.

### Citation List

### Patent Literature

PTL 1: Japanese Laid-Open Patent Application Publication No. 2008-144262
PTL 2: Japanese Laid-Open Patent Application Publication No. 62-196390

### Summary of Invention

### Technical Problem

The present invention was made in light of the above prior arts, and an object of the present invention is to provide a diaphragm having a gas barrier property, low electrical resistance, chemical strength, physical strength, and manufacturability for the purpose of further increasing performance of an alkaline water electrolyzer and reducing a cost of the alkaline water electrolyzer.

### Solution to Problem

The diaphragm of the alkaline water electrolyzer is required to have (1) the gas barrier property, (2) electrolysis efficiency, (3) the chemical strength, (4) the physical strength, and (5) the manufacturability. Regarding item (1), the gas barrier property denotes that only ions pass through the diaphragm, and generated gas does not pass or dissipate. This is important for the purpose of collecting high-purity hydrogen and oxygen. The gas barrier property is affected by hydrophilicity of the surface of the diaphragm. Regarding item (2), the electrolysis efficiency denotes electrolysis efficiency of the alkaline water electrolyzer to which the diaphragm is applied. The electrolysis efficiency is affected by the hydrophilicity of the surface of the diaphragm and the electrical resistance of the diaphragm. The hydrophilic prevents the electrolysis efficiency from decreasing by bubbles adhering to the surface of the diaphragm. The low electrical resistance (i.e., high ion conductivity) of the diaphragm is important for the purpose of improving the electrolysis efficiency of the alkaline water electrolyzer and increasing the productivity of hydrogen and oxygen. Regarding item (3), heat resistance and alkali resistance are required as the chemical strength. The required heat resistance is set to such a level that the diaphragm can endure a temperature (about 80°C) of the alkali aqueous solution. The required alkali resistance is set to such a level that the diaphragm can endure high-concentration alkali (for example, KOH of 25 wt.%) of the alkali aqueous solution. Regarding item (4), abrasion resistance with respect to friction between the diaphragm and the electrode is required as the physical strength. As in the electrolysis unit of PTL 1, when the electrode and the diaphragm are in contact with each other, the electrode vibrates by the generation of the bubbles from the surface of the electrode, and this causes the friction between the electrode and the diaphragm. If the diaphragm is worn away, the frequency of replacement of the diaphragm increases, and this is not economical. In addition, a problem is that the productivity of hydrogen and oxygen deteriorates. Further, regarding item (5), manufacturability of being able to industrially manufacture a large-scale diaphragm of about 2,000 mm square is required. The alkaline water electrolyzer can be configured as not only a small-scale alkaline water electrolyzer but also a large-scale alkaline water electrolyzer, such as a hydrogen manufacturing plant. Such a large-scale alkaline water electrolyzer requires a diaphragm having a relatively large area.

The present inventors have studied various diaphragm materials and found that a polymer compound selected from the group consisting of polyether sulfone and polysulfone is preferable since such a polymer compound adequately has the chemical strength (the heat resistance and the alkali resistance) required in the diaphragm of the alkaline water electrolyzer. Further, to satisfy the requirements of the gas barrier property and the electrolysis efficiency in addition to the chemical strength, polyether sulfone whose contact angle falls within a predetermined contact angle range and/or polysulfone whose contact angle falls within the predetermined contact angle range are used as a major component of the diaphragm.

Furthermore, to satisfy the requirements of the physical strength and the manufacturability, organic fiber non-woven fabric having excellent tensile strength and rigidity or organic fiber woven fabric having excellent tensile strength and rigidity is used as a reinforcing layer of the diaphragm. This compensates the physical strength and the manufacturability, which cannot be adequately obtained only by the polymer porous membrane. Thus, the diaphragm obtains the required properties. It should be noted that the polymer porous membrane containing polyether sulfone or polysulfone as the major component has a certain degree of physical strength but does not satisfy the physical strength or manufacturability required in the diaphragm of the alkaline water electrolyzer.

An alkaline water electrolysis diaphragm according to the present invention includes: a polymer porous layer containing at least one polymer compound selected from polyether sulfone having a contact angle of 20 to 90° and polysulfone having the contact angle of 20 to 90°; and an organic fiber fabric layer coupled to the polymer porous layer.

A method of manufacturing an alkaline water electrolysis diaphragm according to the present invention includes: adding at least one polymer compound selected from polyether sulfone having a contact angle of 20 to 90° and polysulfone having the contact angle of 20 to 90° to an organic solvent at a concentration of 12.5 to 30 wt.% to obtain a membrane forming solution; applying the membrane forming solution to organic fiber fabric; and performing phase separation of the membrane forming solution.

The polyether sulfone having the contact angle of 20 to 90° may be at least one polymer compound selected from the group consisting of polyether sulfone, hydrophilic polyether sulfone, cationic polyether sulfone, and cationic hydrophilic polyether sulfone. The polysulfone having the contact angle of 20 to 90° may be at least one polymer compound selected from the group consisting of polysulfone, hydrophilic polysulfone, cationic polysulfone, and cationic hydrophilic polysulfone. The hydrophilic polyether sulfone obtains the hydrophilicity by introducing a hydrophilic functional group or a hydrophilic graft chain into polyether sulfone. The hydrophilic polysulfone obtains the hydrophilicity by introducing a hydrophilic functional group or a hydrophilic graft chain into polysulfone. The cationic polyether sulfone is obtained by introducing a cationic functional group to polyether sulfone. The cationic polysulfone is obtained by introducing a cationic functional group to polysulfone. When the polymer compound as the diaphragm material is the hydrophilic polyether sulfone and/or the hydrophilic polysulfone, the polymer compound whose contact angle falls within a predetermined contact angle range is stably supplied, and the hydrophilicity of the diaphragm can be controlled. When the polymer compound as the diaphragm material is the cationic polyether sulfone and/or the cationic polysulfone, the ion permeability of the diaphragm can be controlled. When the polymer compound of the diaphragm material is the cationic hydrophilic polyether sulfone and/or the cationic hydrophilic polysulfone, both the hydrophilicity and cationicity can be given to the diaphragm, so that the diaphragm can obtain the excellent ion permeability.

In the alkaline water electrolysis diaphragm and the method of manufacturing alkaline water electrolysis diaphragm, each of the polyether sulfone having the contact angle of 20 to 90° and the polysulfone having the contact angle of 20 to 90° may have a hydrophilic functional group or a hydrophilic graft chain at a rate of 1 to 100% per polymer repeating unit. Further, in the alkaline water electrolysis diaphragm and the method of manufacturing alkaline water electrolysis diaphragm, each of the polyether sulfone having the contact angle of 20 to 90° and the polysulfone having the contact angle of 20 to 90° may have a cationic functional group at a rate of 1 to 100% per polymer repeating unit.

In the alkaline water electrolysis diaphragm, the organic fiber fabric layer may be made of organic fiber non-woven fabric having a density of 0.1 to 0.7 g/cm³. Similarly, in the method of manufacturing the alkaline water electrolysis diaphragm, the organic fiber fabric may be organic fiber non-woven fabric having a density of 0.1 to 0.7 g/cm³.

In the method of manufacturing the alkaline water electrolysis diaphragm, the organic solvent may be selected from the group consisting of dimethyl sulfoxide (DMSO), N-methyl-2-pyrrolidone (NMP), dimethylformamide (DMF), dimethylacetamide (DMAc), and a mixture of these.

The alkaline water electrolyzer according to the present invention includes: an electrolysis tank including an anode chamber and cathode chamber that are defined by the alkaline water electrolysis diaphragm according to any one of claims 1 to 6; an anode provided in the anode chamber; a cathode provided in the cathode chamber; and an elastic body having an electrical conductivity and configured to press the cathode toward the alkaline water electrolysis diaphragm such that the anode, the alkaline water electrolysis diaphragm, and the cathode tightly contact one another.

### Advantageous Effects of Invention

The alkaline water electrolysis diaphragm of the present invention includes the polymer porous layer and the organic fiber fabric layer. The polymer porous layer maintains various chemical properties of polyether sulfone and polysulfone, and the hydrophilicity and chargeability of the polymer porous layer are adjusted. The alkaline water electrolysis diaphragm excels in chemical strength, and in addition, has the hydrophilicity and/or the ion permeability which prevent the gas barrier property and the electrolysis efficiency from deteriorating. Further, the alkaline water electrolysis diaphragm of the present invention includes the organic fiber fabric layer. With this, the physical strength of the polymer porous layer is compensated, so that the manufacturability is improved.

### Brief Description of Drawings

Fig. 1A is a schematic cross-sectional view showing a diaphragm according to one aspect of the present invention, the diaphragm being configured such that a polymer porous layer is formed on one surface of an organic fiber fabric layer.
Fig. 1B is a schematic cross-sectional view showing a diaphragm according to another aspect of the present invention, the diaphragm being configured such that polymer porous layers are formed on both surfaces of an organic fiber fabric layer.
Fig. 2 is a diagram showing a schematic configuration of a membrane forming apparatus for the alkaline water electrolysis diaphragm according to one embodiment of the present invention.
Fig. 3 is a cross-sectional view showing a schematic configuration of an electrolysis cell included in the alkaline water electrolyzer.
Fig. 4 is a diagram showing a schematic configuration of a testing apparatus.
Fig. 5 is a graph showing test results of the diaphragm according to Example 1.
Fig. 6 is a graph showing test results obtained when a polymer porous membrane according to Reference Example 1 is used as the diaphragm.
Fig. 7 is a graph showing test results obtained when a polymer porous membrane according to Reference Example 2 is used as the diaphragm.

### Description of Embodiments

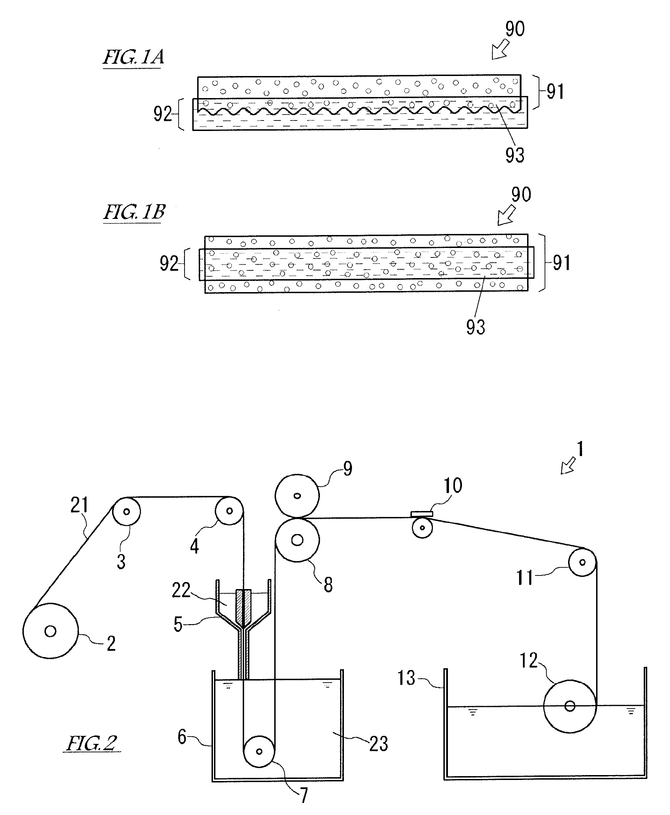

An embodiment of the present invention will be explained in reference to the drawings. Fig. 1A is a schematic cross-sectional view showing a diaphragm according to one aspect of the present invention, the diaphragm being configured such that a polymer porous layer is formed on one surface of an organic fiber fabric layer. Fig. 1B is a schematic cross-sectional view showing a diaphragm according to another aspect of the present invention, the diaphragm being configured such that polymer porous layers are formed on both surfaces of an organic fiber fabric layer. As shown in Figs. 1A and 1B, an alkaline water electrolysis diaphragm (hereinafter may be simply referred to as a "diaphragm") 90 according to each of one aspect of the present invention and another aspect of the present invention is constituted by a polymer porous layer (hereinafter may be simply referred to as a "porous layer") 91 and an organic fiber fabric layer (hereinafter may be simply referred to as a "fabric layer") 92 and has ion permeability, liquid permeability, and gas impermeability. As shown in Fig. 1A, the porous layer 91 may be formed on one surface of the fabric layer 92. As shown in Fig. 1B, the porous layers 91 may be formed on both surfaces of the fabric layer 92. An interface between the porous layer 91 and the fabric layer 92 constitutes a mixed layer 93 in which a polymer compound gets into fabric tissues or structural gaps. The porous layer 91 and the fabric layer 92 are coupled to each other by the mixed layer 93.

A major component of the porous layer 91 is at least one polymer compound selected from polyether sulfone and polysulfone each of which has a contact angle of 20 to 90° at normal temperature. The contact angle indicates wettability. The polyether sulfone is at least one polymer compound selected from the group consisting of polyether sulfone (polyether sulfone not having an aryl group or polyether sulfone not having a below-described hydrophilic group or cationic group at its terminal), hydrophilic polyether sulfone, cationic polyether sulfone, and cationic hydrophilic polyether sulfone. Further, the polysulfone is at least one polymer compound selected from the group consisting of polysulfone (polysulfone not having an aryl group or polysulfone not having a below-described hydrophilic group or cationic group at its terminal), hydrophilic polysulfone, cationic polysulfone, and cationic hydrophilic polysulfone.

According to the diaphragm whose major component is the polymer compound having the contact angle of less than 20°, wetting of the surface of the diaphragm by an electrolytic solution increases, and this decreases the chemical strength of the diaphragm. Further, the diaphragm whose major component is the polymer compound having the contact angle of more than 90° is low in the gas barrier property and the electrolysis efficiency, and therefore, is not suitable for use. The contact angle is measured in such a manner that: a waterdrop is dropped onto a sheet of the polymer compound to be measured; and an angle formed by the waterdrop and the sheet of the polymer compound is measured at normal temperature. In the present specification, the "normal temperature" denotes a temperature of a solution which is not particularly heated or cooled. Specifically, the normal temperature is 0 to 40°C and is typically a temperature around 15 to 25°C determined by The Japanese Pharmacopoeia.

Chemical Formula 1 below shows a chemical structure of polyether sulfone (PES). The hydrophilic polyether sulfone has the aryl group of the polyether sulfone shown in Chemical Formula 1 or has a hydrophilic functional group (hereinafter may be simply referred to as a "hydrophilic group") or hydrophilic graft chain at its terminal (its head and/or tail). The hydrophilic group is a functional group selected from the group consisting of a hydroxyl group, a carboxyl group, a sulfonate group, and the like. The hydrophilic graft chain is hydrophilic polymer selected from the group consisting of polyacrylamide, polyacrylic acid, poly(2-hydroxyethyl methacrylate), and the like. The hydrophilic group may be cationic. The polyether sulfone having the cationic hydrophilic group, that is, the cationic hydrophilic polyether sulfone is a polymer compound having both hydrophilicity and cationicity. The cationic polyether sulfone has the aryl group of the polyether sulfone shown in Chemical Formula 1 or has a cationic functional group (hereinafter may be simply referred to as a "cationic group") at its terminal (its head and/or tail). The cationic group is, for example, a cationic amino group, such as an aminomethyl group or an aminoethyl group.

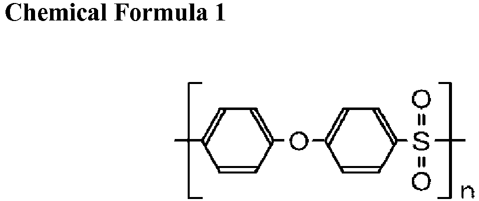

A rate of the hydrophilic group or hydrophilic graft chain in the hydrophilic polyether sulfone is preferably 1 to 100% per polymer repeating unit and more preferably 1 to 50% per polymer repeating unit. The polyether sulfone in which the rate of the hydrophilic group or hydrophilic graft chain is less than 1% per polymer repeating unit becomes low in hydrophilicity. Further, the polyether sulfone in which the rate of the hydrophilic group or hydrophilic graft chain is more than 100% per polymer repeating unit is poor in chemical stability.

A molecular weight of the hydrophilic polyether sulfone is preferably in a range of 10,000 to 500,000 and more preferably in a range of 40,000 to 300,000. If the molecular weight is less than 10,000, the porous layer significantly lacks the physical strength, so that the formation of the porous layer becomes difficult. Further, it is practically difficult to obtain the hydrophilic polyether sulfone having the molecular weight of more than 500,000.

A rate of the cationic group in the cationic polyether sulfone is preferably 1 to 100% per polymer repeating unit and more preferably 1 to 50% per polymer repeating unit. The polyether sulfone in which the rate of the cationic group is less than 1% per polymer repeating unit is low in chargeability. Further, the polyether sulfone in which the rate of the cationic group is more than 100% per polymer repeating unit is poor in solubility to an organic solvent.

A molecular weight of the cationic polyether sulfone is preferably in a range of 10,000 to 1,000,000 and more preferably in a range of 40,000 to 800,000. If the molecular weight is less than 10,000, the porous layer significantly lacks the physical strength, so that the formation of the porous layer becomes difficult. Further, it is practically difficult to obtain the cationic polyether sulfone having the molecular weight of more than 1,000,000.

The contact angle of the polyether sulfone is 85 to 90° at normal temperature. However, the hydrophilic polyether sulfone may become a polymer compound that stably has a desired contact angle by the hydrophilic group. By using this hydrophilic polyether sulfone as the major component of the porous layer, the hydrophilicity of the diaphragm can be adjusted. Further, by using the cationic polyether sulfone as the major component of the porous layer, the ion permeability of the diaphragm can be adjusted. Furthermore, by using the cationic hydrophilic polyether sulfone as the major component of the porous layer, both the hydrophilicity and the cationicity can be given to the diaphragm, so that the excellent ion permeability can be given to the diaphragm.

Chemical Formula 2 below shows a chemical structure of polysulfone (PSF). The hydrophilic polysulfone has the aryl group of the polysulfone shown by Chemical Formula 2 or the hydrophilic group or hydrophilic graft chain at its terminal (its head and/or tail). The hydrophilic group is a functional group selected from the group consisting of a hydroxyl group, a carboxyl group, a sulfonate group, and the like. The hydrophilic group may be a cationic hydrophilic group. The polysulfone having the cationic hydrophilic group, that is, the cationic hydrophilic polysulfone is a polymer compound having both the hydrophilicity and the cationicity. Further, the cationic polysulfone has the aryl group of the polysulfone shown in Chemical Formula 2 or has the cationic group at its terminal (its head and/or tail). The cationic group is, for example, a cationic amino group, such as an aminomethyl group or an aminoethyl group.

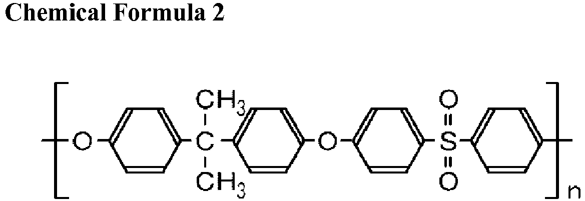

A rate of the hydrophilic group or hydrophilic graft chain in the hydrophilic polysulfone is preferably 1 to 100% per polymer repeating unit and more preferably 1 to 40% per polymer repeating unit. The polysulfone in which the rate of the hydrophilic group or hydrophilic graft chain is less than 1% per polymer repeating unit becomes low in hydrophilicity. Further, the polysulfone in which the rate of the hydrophilic group or hydrophilic graft chain is more than 100% per polymer repeating unit is poor in chemical stability.

A molecular weight of the hydrophilic polysulfone is preferably in a range of 10,000 to 500,000 and more preferably in a range of 40,000 to 300,000. If the molecular weight is less than 10,000, the porous layer significantly lacks the physical strength, so that the formation of the porous layer becomes difficult. Further, it is practically difficult to obtain the hydrophilic polysulfone having the molecular weight of more than 500,000.

A rate of the cationic group in the cationic polysulfone is preferably 1 to 100% per polymer repeating unit and more preferably 1 to 50% per polymer repeating unit. The polysulfone in which the rate of the cationic group is smaller than 1% per polymer repeating unit is low in chargeability. Further, the polysulfone in which the rate of the cationic group is more than 100% per polymer repeating unit is poor in solubility to an organic solvent.

A molecular weight of the cationic polysulfone is preferably in a range of 10,000 to 500,000 and more preferably in a range of 40,000 to 300,000. If the molecular weight is less than 10,000, the porous layer significantly lacks the physical strength, so that the formation of the porous layer becomes difficult. Further, it is practically difficult to obtain the cationic polysulfone having the molecular weight of more than 500,000.

The contact angle of the polysulfone is 85 to 90° at normal temperature. However, the hydrophilic polysulfone may become a polymer compound that stably has a desired contact angle by the hydrophilic group. By using this hydrophilic polysulfone as the major component of the porous layer, the hydrophilicity of the diaphragm can be adjusted. Further, by using the cationic polysulfone as the major component of the porous layer, the ion permeability of the diaphragm can be adjusted. Furthermore, by using the cationic hydrophilic polysulfone as the major component of the porous layer, both the hydrophilicity and the cationicity can be given to the diaphragm, so that the excellent ion permeability can be given to the diaphragm.

The porous layer may further contain a hydrophilic inorganic material selected from titanium oxide (TiO₂), zirconium oxide (ZrO₂), and a mixture of titanium oxide (TiO₂) and zirconium oxide (ZrO₂). When the porous layer contains the hydrophilic inorganic material, further improvement of the ion conductivity of the diaphragm is expected.

The fabric layer is formed by organic fiber non-woven fabric or organic fiber woven fabric selected from polypropylene (PP) and polyphenylene sulfide (PPS). The polypropylene is high in physical strength and has an insulation property, heat resistance, and alkali resistance. The polyphenylene sulfide is high in physical strength and has heat resistance and alkali resistance. Each of the polypropylene non-woven fabric, the polypropylene woven fabric, the polyphenylene sulfide non-woven fabric, and the polyphenylene sulfide woven fabric having the above properties adequately has the physical strength and chemical strength required in the diaphragm of the alkaline water electrolyzer, so that these are preferable as the diaphragm material. Further, by using such organic fiber non-woven fabric or such organic fiber woven fabric, the manufacturability can be given to the diaphragm as described below.

Table 1 below shows: properties (materials and densities) of the organic fiber non-woven fabric of samples S1 to S6; and evaluation results of the samples as the diaphragm material. A polymer porous membrane layer made of the hydrophilic polyether sulfone is formed on the organic fiber non-woven fabric of each of the samples S1 to S6, and the non-woven fabric of each of the samples S1 to S6 is evaluated based on the electrolysis efficiency and a membrane formation state.

**Table 1**

| Samples | Non-woven fabric material | Density (g/cm³) | Evaluation (Good or No good) |
|---|---|---|---|
| S1 | PPS | 0.48-0.55 | Good |
| S2 | PPS | 0.68-0.94 | No good |
| S3 | PP | 0.38 | Good |
| S4 | PP | 0.43 | Good |
| S5 | PP | 0.16-0.34 | Good |
| S6 | PP | 0.36-0.45 | Good |

According to the sample S2, the electrolysis efficiency is extremely low, and the polymer porous membrane layer separates from the organic fiber non-woven fabric. According to the evaluation results, the density of the organic fiber non-woven fabric forming the fabric layer of the diaphragm is preferably 0.1 to 0.7 g/cm³ and especially desirably 0.3 to 0.6 g/cm³. The diaphragm using the organic fiber non-woven fabric having the density of less than 0.1 g/cm³ cannot sufficiently obtain the gas barrier property. The diaphragm using the organic fiber non-woven fabric having the density of more than 0.7 g/cm³ may lack the electrolysis efficiency or cause a membrane formation failure.

### Method of manufacturing alkaline water electrolysis diaphragm

The diaphragm according to the present embodiment is manufactured by a phase separation method using the polymer compound and the organic fiber fabric. Fig. 2 is a diagram showing a schematic configuration of a membrane forming apparatus 1 for the alkaline water electrolysis diaphragm according to one embodiment of the present invention. The membrane forming apparatus 1 can continuously manufacture the diaphragms.

As shown in Fig. 2, the membrane forming apparatus 1 includes: a coating unit 5; a chemical liquid tank 6; an unwinding drum 2 that is a web roll of fabric 21; a winding drum 12 configured to wind a product (diaphragm); and a water tank 13 in which the winding drum 12 is immersed in water. The membrane forming apparatus 1 further includes: a plurality of guide rollers 3, 4, 7, and 11 that form a transfer pathway for the fabric 21 and the product, the transfer pathway extending from the unwinding drum 2 through the coating unit 5 and the chemical liquid tank 6 to the winding drum 12; a driving roller 8 and nip roller 9 configured to transfer the fabric 21 (product) along the transfer pathway; and a slitter 10 configured to cut the transferred product into a desired size.

The coating unit 5 includes a slit through which a membrane forming solution 22 flows out. The coating unit 5 applies the membrane forming solution 22 to the surface of the moving fabric 21 at a predetermined thickness. The coating unit 5 can apply the membrane forming solution 22 to one selected surface of the fabric 21 or both surfaces of the fabric 21. The membrane forming solution 22 is supplied to the coating unit 5 from a solution supply device (not shown). The membrane forming solution 22 is prepared in the solution supply device in such a manner that the polymer compound in powder form and an additive that acts on a structure (pore diameter, pore distribution, etc.) of the porous layer are dissolved in an organic solvent.

When the weight of the membrane forming solution is regarded as 100% as a reference, the concentration of the polymer compound in the membrane forming solution 22 is 12.5 to 30 wt.% and preferably 15 to 25 wt.%. When the concentration of the polymer compound in the membrane forming solution 22 is less than 12.5 wt.%, a membrane (porous layer) having an adequate strength cannot be obtained. Further, when the concentration of the polymer compound in the membrane forming solution 22 exceeds 30 wt.%, the diameter of the pore formed becomes extremely small, and this deteriorates the electrolysis efficiency of the electrolysis apparatus to which the diaphragm is applied.

The organic solvent of the membrane forming solution needs to be an organic solvent in which polyether sulfone, polysulfone, hydrophilic polyether sulfone, hydrophilic polysulfone, cationic polyether sulfone, and cationic polysulfone can be dissolved and which has miscibility with water. For example, such organic solvent can be selected from the group consisting of dimethyl sulfoxide (DMSO), N-methyl-2-pyrrolidone (NMP), dimethylformamide (DMF), dimethylacetamide (DMAc), and a mixture of these.

In the membrane forming apparatus 1, the fabric 21 is unwound from the unwinding drum 2 to move along the transfer pathway to the coating unit 5. While the fabric 21 passes through the coating unit 5, the membrane forming solution 22 is applied to both surfaces of the fabric 21 or one surface of the fabric 21. Apart of the membrane forming solution 22 applied is impregnated in the fabric 21. The fabric 21 to which the membrane forming solution 22 is applied is then immersed in a chemical liquid (nonsolvent) 23 in the chemical liquid tank 6. Herein, the fabric 21 to which the membrane forming solution 22 is applied is entirely immersed in the chemical liquid 23. However, the fabric 21 to which the membrane forming solution 22 is applied may be immersed in the chemical liquid 23 such that at least the membrane forming solution 22 contacts the chemical liquid 23. In the chemical liquid tank 6, phase separation of the membrane forming solution 22 applied to the fabric 21 occurs, so that a porous structure of the polymer compound is formed. Thus, the polymer compound in the membrane forming solution 22 solidifies, and as a result, the porous layer is formed on the fabric 21. It should be noted that the chemical liquid (nonsolvent) is preferably water in light of cost and the like.

The fabric 21 on which the porous layer is formed as above is then sandwiched between the driving roller 8 and the nip roller 9. Thus, the thickness of the fabric 21 is uniformized, and excess water is removed from the fabric 21. Then, the fabric 21 is cut by the slitter 10 into an appropriate size and wound by the winding drum 12. The winding drum 12 is immersed in water in the water tank 13. The product (alkaline water electrolysis diaphragm) wound by the winding drum 12 is held in a wet state.

Since the diaphragm manufactured as above includes the fabric 21 as a base, the porous layer does not break or extend during manufacturing. Therefore, severe adjustment of a transfer speed of the fabric 21 in the membrane forming apparatus 1 is not required, and a manufacturing speed can be made higher than a conventional manufacturing speed. Further, by using a web roll of wide fabric 21, a diaphragm (a square shape having 2,000 mm on each side) larger than a conventionally used diaphragm can be manufactured. As above, the manufacturability is improved by including the fabric layer in the diaphragm.

The thickness of the diaphragm manufactured as above is adjusted by the thickness of the membrane forming solution applied to the fabric 21. The thickness of the diaphragm is preferably 100 to 700 µm although it depends on the thickness of the fabric layer. If the thickness of the diaphragm is less than 100 µm, the physical strength required in the diaphragm for the alkaline water electrolysis may be inadequate. If the thickness of the diaphragm exceeds 700 µm, the electrical resistance of the diaphragm easily increases, and the electrolysis efficiency decreases.

In the above embodiment, the diaphragms are continuously manufactured using the membrane forming apparatus 1 shown in Fig. 2. However, the method of manufacturing the diaphragm is not limited to this. For example, the diaphragm may be manufactured in such a manner that: fabric is spread on a smooth surface, such as a glass plate, made of an inert material; a membrane forming solution is uniformly applied to the fabric at a predetermined thickness; the phase separation of the membrane forming solution is performed; and the fabric is removed from the smooth surface.

Further, in the above embodiment, to form the porous layer, the fabric 21 to which the membrane forming solution 22 is applied is immersed in the chemical liquid 23. Instead of this, the membrane forming solution 22 applied to the fabric 21 may be brought into contact with humidified air.

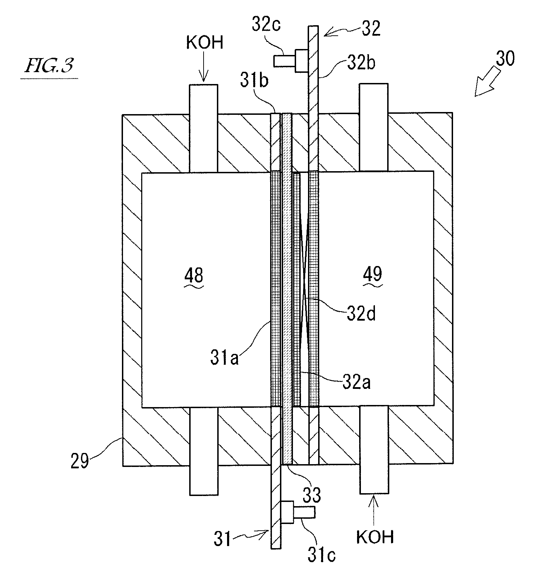

The diaphragm manufactured as above is used in, for example, the alkaline water electrolyzer explained below. Fig. 3 is a cross-sectional view showing an outline of an electrolysis cell 30 included in the alkaline water electrolyzer.

As shown in Fig. 3, the electrolysis cell 30 includes an electrolysis tank 29 in which an anode chamber 48 and a cathode chamber 49 are provided so as to sandwich a diaphragm 33. Each of the anode chamber 48 and the cathode chamber 49 includes: a supply port for the electrolytic solution; and a discharge port for the electrolytic solution after the electrolysis and the gas (hydrogen or oxygen). An anode assembly 31 is provided at the anode chamber 48 side with respect to the diaphragm 33 in the electrolysis tank 29. The anode assembly 31 includes: a mesh-like anode 31a; an anode frame 31b provided around the anode 31a; and a connecting terminal 31c provided at the anode frame 31b. A cathode assembly 32 is provided at the cathode chamber 49 side with respect to the diaphragm 33 in the electrolysis tank 29. The cathode assembly 32 includes: a mesh-like cathode 32a; a cathode frame 32b provided at the cathode 32a so as to be located at an opposite side of the diaphragm 33; a connecting terminal 32c provided at the cathode frame 32b; and an elastic body 32d provided between the cathode 32a and the cathode frame 32b and having electrical conductivity. The cathode 32a is pressed against the diaphragm 33 by the elastic body 32d. Thus, the anode 31a and the diaphragm 33 tightly contact each other, and the diaphragm 33 and the cathode 32a tightly contact each other. As above, the electrolysis cell 30 has a zero-gap structure that is low in solution resistance. The elastic body 32d according to the present embodiment is a plate spring, but the elastic body 32d is not limited to the plate spring.

In the electrolysis cell 30 configured as above, the diaphragm 33 is provided such that: the porous layer faces the anode 31 a; and the fabric layer faces the cathode 32a. If the diaphragm 33 is provided such that the fabric layer faces the anode 31 a, oxygen generated at the anode 31a adheres to the fabric layer of the diaphragm 33, and this increases the electrical resistance of the diaphragm 33 and therefore decreases the electrolysis efficiency. Thus, it is not preferable to provide the diaphragm 33 such that the fabric layer faces the anode 31a.

### Examples

### Example 1

A diaphragm according to Example 1 was obtained by a nonsolvent induction phase separation method using, as the hydrophilic polyether sulfone, polyether sulfone (Sumikaexcel (trademark) 5003PS produced by Sumitomo Chemical Company, contact angle of 65 to 74°, rate of hydroxyl group per polymer repeating unit of 89%) having a hydroxyl group at its terminal and also using, as the fabric, PPS non-woven fabric (Torcon paper (trademark) PS0100 produced by Toray Industries, Inc., thickness of 0.21 mm, density of 0.48 to 0.55 g/cm³). Specifically, first, the hydrophilic polyether sulfone was added to N-methyl-2-pyrrolidone (produced by Daishin Chemical Co., Ltd.) at a concentration of 15 wt.% and stirred for 24 hours to obtain an adequately uniform solution. The solution was left at rest for 24 hours to adequately remove bubbles from the solution. Thus, the membrane forming solution was prepared. Next, fabric was spread on a glass plate, and the membrane forming solution was applied to the fabric at a uniform thickness. The glass plate to which the membrane forming solution was applied was then immersed in the chemical liquid (water) to remove the organic solvent. The fabric was then removed from the glass plate. Thus, the diaphragm was obtained. The thickness of the diaphragm according to Example 1 was 500 to 700 µm.

### Example 2

A diaphragm according to Example 2 was obtained by a nonsolvent induction phase separation method using polysulfone (Ultrason (trademark) S6010 produced by BASF Japan Ltd., molecular weight of 50,000, contact angle of 85 to 90°, rate of hydroxyl group per polymer repeating unit of 0) and PPS non-woven fabric (Torcon paper (trademark) PS0100 produced by Toray Industries, Inc.). Specifically, the polyether sulfone was added to N-methyl-2-pyrrolidone (produced by Daishin Chemical Co., Ltd.) at a concentration of 15 wt.%, and the membrane forming solution was prepared in the same manner as in Example 1. By using this membrane forming solution, the diaphragm was obtained in the same manner as in Example 1. The thickness of the diaphragm according to Example 2 was 500 to 700 µm.

### Reference Examples

In Reference Examples, polymer porous membranes simulating the porous layer constituting the diaphragm for the alkaline water electrolyzer were produced.

### Reference Example 1

A polymer porous membrane according to Reference Example 1 was obtained by a nonsolvent induction phase separation method using polyether sulfone (Sumikaexcel (trademark) 5003PS produced by Sumitomo Chemical Company) having a hydroxyl group at its terminal. Specifically, first, the hydrophilic polyether sulfone was added to N-methyl-2-pyrrolidone (produced by Daishin Chemical Co., Ltd.) at a concentration of 15 wt.% and stirred for 24 hours to obtain an adequately uniform solution. The solution was left at rest for 24 hours to adequately remove bubbles from the solution. Thus, the membrane forming solution was prepared. Next, the membrane forming solution was uniformly applied to a smooth glass plate at a predetermined thickness. The glass plate to which the membrane forming solution was applied was then immersed in a chemical liquid (water) to remove the organic solvent. The formed membrane was removed from the glass plate. Thus, the polymer porous membrane was obtained. The thickness of the polymer porous membrane according to Reference Example 1 was 150 to 250 µm.

### Reference Example 2

A polymer porous membrane according to Reference Example 2 was obtained by a nonsolvent induction phase separation method using polysulfone having a sulfonate group. Specifically, the hydrophilic polysulfone was added to N-methyl-2-pyrrolidone (produced by Daishin Chemical Co., Ltd.) at a concentration of 15 wt.%, and the membrane forming solution was prepared in the same manner as in Reference Example 1. By using this membrane forming solution, the polymer porous membrane was obtained in the same manner as in Reference Example 1. The thickness of the polymer porous membrane according to Reference Example 2 was 150 to 250 µm.

### Reference Example 3

A polymer porous membrane according to Reference Example 3 was obtained by a nonsolvent induction phase separation method using polysulfone (Ultrason (trademark) S6010 produced by BASF Japan Ltd.). Specifically, the polyether sulfone was added to N-methyl-2-pyrrolidone (produced by Daishin Chemical Co., Ltd.) at a concentration of 15 wt.%, and the membrane forming solution was prepared in the same manner as in Reference Example 1. By using this membrane forming solution, the polymer porous membrane was obtained in the same manner as in Reference Example 1.

### Comparative Example

As Comparative Example 1 for comparison with Examples and Reference Examples, a commercially available fluorine-based ion-exchange membrane (Flemion (trademark) F8020SP produced by Asahi Glass Co., Ltd.) mostly used in chlor-alkali process to manufacture chlorine caustic soda was used.

### Performance test of diaphragm

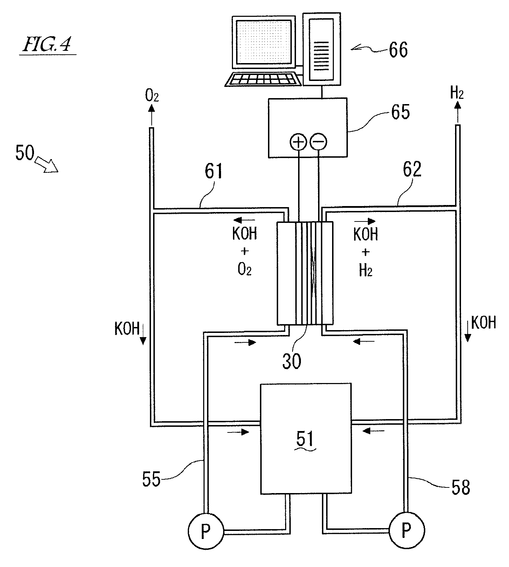

Performances of the diaphragms according to Examples 1 and 2 and performances of the polymer porous membranes according to Reference Examples 1, 2, and 3 were measured by a testing apparatus 50 schematically shown in Fig. 4. The testing apparatus 50 includes the electrolysis cell 30, an electrolytic solution storage tank 51, a DC power supply device 65, a computer 66, and the like. A KOH aqueous solution that is the electrolytic solution is generated and stored in the electrolytic solution storage tank 51. The electrolytic solution is supplied from the electrolytic solution storage tank 51 through a pipe 55 to the anode chamber 48 of the electrolysis cell 30. Further, the electrolytic solution is supplied from the electrolytic solution storage tank 51 through a pipe 58 to the cathode chamber 49 of the electrolysis cell 30. By control of the computer 66, a predetermined DC current flows from the DC power supply device 65 to the electrodes of the electrolysis cell 30. Although not shown, the testing apparatus 50 includes: a voltmeter configured to measure a voltage between the anode 31a and cathode 32a of the electrolysis cell 30; and an overvoltage measuring device configured to measure oxygen overvoltage and hydrogen overvoltage. Measurement results of the voltmeter and the overvoltage measuring device are analyzed by the computer 66. Oxygen is generated by water electrolysis in the anode chamber 48 of the electrolysis cell 30, and the KOH aqueous solution and the oxygen are discharged from the anode chamber 48 through a pipe 61. Hydrogen is generated by water electrolysis in the cathode chamber 49 of the electrolysis cell 30, and the KOH aqueous solution and the hydrogen are discharged from the cathode chamber 49 through a pipe 62. The oxygen concentration of the discharged hydrogen and the hydrogen concentration of the discharged oxygen are measured by a concentration measuring device (not shown).

The electrolytic solution (KOH aqueous solution) supplied from the electrolytic solution storage tank 51 to the electrolysis cell 30 had a concentration of 25 wt.% and a temperature of 80°C. Regarding the electrodes of the testing apparatus, a pure nickel mesh was used as the anode, and an active cathode for hydrogen generation was used as the cathode. The density of the current supplied from the power supply device 65 to the electrolysis cell 30 was 40 A/dm². A cell voltage, the hydrogen concentration of the generated oxygen, the oxygen concentration of the generated hydrogen, the oxygen overvoltage, and the hydrogen overvoltage were measured in the testing apparatus 50 configured as above. The cell voltage was measured by a cell voltage measuring device. In the performance tests of the diaphragms according to Examples 1 and 2, the electrolysis cell 30 in which an electrolysis area of the electrolysis tank was 1 dm² was used. In the performance tests of the diaphragms according to Reference Example 1, 2, and 3, the electrolysis cell 30 in which the electrolysis area of the electrolysis tank was 0.2 dm² was used.

Table 2 shows measurement results regarding an average cell voltage, the hydrogen concentration of the generated oxygen, the oxygen concentration of the generated hydrogen, and water permeability (permeated water flow rate) when each of the diaphragms according to Examples 1 and 2 and the ion-exchange membranes according to Comparative Example 1 was applied to the testing apparatus 50, and the alkaline water electrolysis was performed for 2,000 hours. The average cell voltage shown in Table 2 was obtained in such a manner that: each measured value was corrected as a voltage value at 80°C; and a difference between each corrected value and a corrected value of Comparative Example 1 was calculated. The water permeability of each of the alkaline water electrolysis diaphragms according to Examples, the ion-exchange membrane according to Comparative Example, and the polymer porous membranes according to Reference Examples is represented by the permeated water flow rate measured using a filtration device (stirring type ultra holder UHP-43K produced by ADVANTEC). The filtration device is configured such that permeated water is obtained by applying predetermined water pressure to the membrane using a gas bomb. The membrane (the alkaline water electrolysis diaphragm, the ion-exchange membrane, or the polymer porous membrane) was placed at a predetermined position of the filtration device, and water pressure of 0.2 MPa was applied to the membrane using inert (nitrogen) gas for 10 to 20 seconds, and as a result, the permeated water was generated. During this operation, the flow rate of the permeated water was measured three times using an electronic balance, and an average value of the measured flow rates of the permeated water was regarded as the permeated water flow rate. The water permeability of the membrane was evaluated based on this permeated water flow rate. Therefore, the water permeability was a value calculated using the gas pressure, the area of the membrane, the measurement time, and the permeated water flow rate.

**Table 2**

| | Example 1 | Example 2 | Comparative Example 1 |
|---|---|---|---|
| | Hydrophilic polyether sulfone + PPS nonwoven fabric | Polysulfone + PPS nonwoven fabric | Ion-exchange membrane for brine electrolysis |
| Average cell voltage [V] (difference from Comparative Example 1) | -0.38 | -0.35 | 0 |
| Average hydrogen concentration of generated oxygen [%] | 0.03 | 0.06 | 0.14 |
| Average oxygen concentration of generated hydrogen [%] | 0.06 | 0.08 | 0.05 |
| Water permeability [1/m²/h/atm] | 5,400 | 2,900 | 0 |

As is clear from Table 2, the cell voltage in each of Examples 1 and 2 is lower than that in Comparative Example 1. To be specific, the electrolysis efficiency when the diaphragm of Example 1 or 2 is used as the diaphragm of the alkaline water electrolyzer is higher than that when the ion-exchange membrane of Comparative Example 1 is used. Further, in Examples 1 and 2, both the average oxygen concentration of the generated hydrogen and the average hydrogen concentration of the generated oxygen are not more than 0.1%, that is, low values. To be specific, the diaphragm according to each of Examples 1 and 2 has an adequately high gas barrier property as with the ion-exchange membrane according to Comparative Example 1. Especially, the gas barrier property of the diaphragm according to Example 1 is more excellent than that of the diaphragm according to Example 2. Although the water permeability in Comparative Example 1 is zero, each of Examples 1 and 2 has the water permeability. As above, since the diaphragm according to each of Examples 1 and 2 has the high gas barrier property and the water permeability, it is preferable as the diaphragm of the alkaline water electrolyzer.

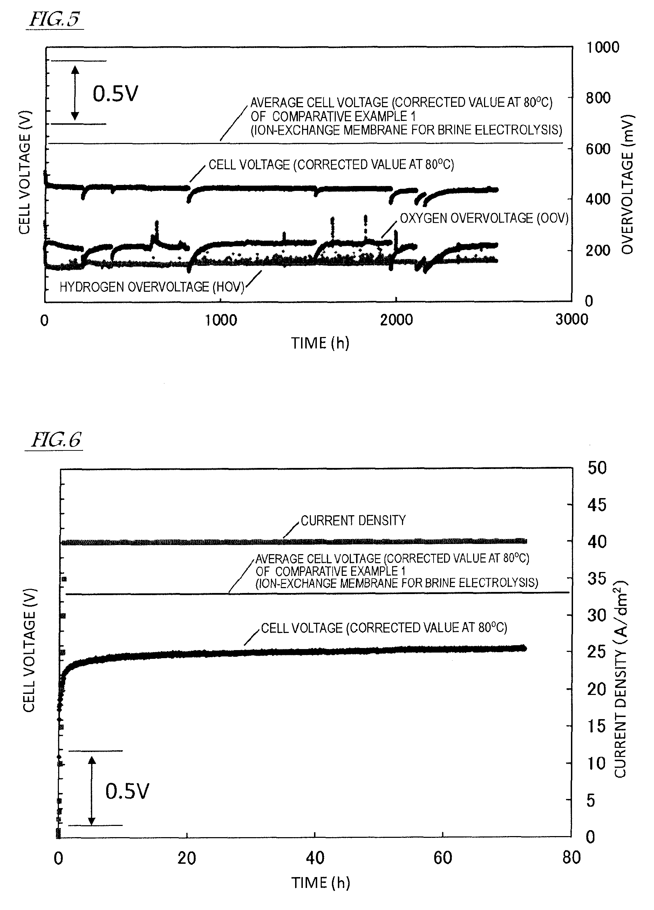

Fig. 5 shows measurement results regarding the cell voltage, the oxygen overvoltage, and the hydrogen overvoltage when the diaphragm according to Example 1 was applied to the testing apparatus 50, and the water electrolysis was performed for 2,000 hours. In Fig. 5, a vertical axis shows the cell voltage (V) and the overvoltage (mV), and a horizontal axis shows an electrolysis time (h). After 60 to 84 hours from the start of the test, the average cell voltage shown in Fig. 5 is -0.34 V with respect to Comparative Example 1. After 2,089 to 2,113 hours from the start of the test, the average cell voltage shown in Fig. 5 is -0.38 V with respect to Comparative Example 1. As above, the cell voltage is maintained at a relatively low value in a long-time operation (2,000 hours or more). Further, the oxygen overvoltage and the hydrogen overvoltage are also maintained at relatively low values in a long-time operation (2,000 hours or more). An electrolysis voltage is represented by a sum of a theoretical electrolysis voltage, an overvoltage, and solution resistance. This shows that since the low solution resistance of the diaphragm according to Example 1 is maintained, the relatively low cell voltage (i.e., high electrolysis efficiency) is maintained.

Table 3 shows measurement results regarding the average cell voltage, the average hydrogen concentration of the generated oxygen, and the water permeability (permeated water flow rate) when each of the polymer porous membranes according to Reference Examples 1, 2, and 3 and the ion-exchange membrane according to Comparative Example 1 was applied as the diaphragm to the testing apparatus 50, and the water electrolysis was performed for 72 hours. The average cell voltage shown in Table 3 was obtained in such a manner that: each measured value was corrected as a voltage value at 80°C; and a difference between each corrected value and a corrected value of Comparative Example 1 was calculated.

**Table 3**

| | Reference Example 1 | Reference Example 2 | Reference Example 3 | Comparative Example 1 |
|---|---|---|---|---|
| | Hydrophilic polyether sulfone | Hydrophilic polysulfone | Polysulfone | Ion-exchange membrane for brine electrolysis |
| Average cell voltage [V] (difference from Comparative Example 1) | -0.38 | -0.33 | -0.26 | 0 |
| Average oxygen concentration of generated hydrogen [%] | 0.10 | 0.17 | 0.08 | 0.15 |
| Water permeability [l/m²/h/atm] | 2,900 | 4,200 | 3,100 | 0 |

As is clear from Table 3, the cell voltage of each of Reference Examples 1, 2, and 3 is lower than that in Comparative Example 1. To be specific, the electrolysis efficiency when the polymer porous membrane of each of Reference Examples 1, 2, and 3 is used as the diaphragm of the alkaline water electrolyzer is higher than that when the ion-exchange membrane according to Comparative Example 1 is used. Therefore, the electrolysis efficiency when the diaphragm including the porous layer having the same components as the polymer porous membrane of any of Reference Examples 1, 2, and 3 is used in the alkaline water electrolyzer can be expected to be higher than that when the ion-exchange membrane according to Comparative Example 1 is used as the diaphragm.

The average oxygen concentration of the generated hydrogen in each of Reference Examples 1 and 3 is lower than that in Comparative Example 1. The average oxygen concentration of the generated hydrogen in Reference Example 2 is slightly higher than that in Comparative Example 1. However, the average oxygen concentration of the generated hydrogen in Reference Example 2 is a preferable value for the diaphragm of the alkaline water electrolyzer. To be specific, the polymer porous membrane according to each of Reference Examples 1, 2, and 3 has the gas barrier property that is adequately high for the diaphragm of the alkaline water electrolyzer. Although the water permeability in Comparative Example 1 is zero, each of Reference Examples 1, 2, and 3 has the water permeability. Therefore, the diaphragm including the porous layer having the same components as the polymer porous membrane of any of Reference Examples 1, 2, and 3 can be expected to have both the preferable gas barrier property and water permeability for the diaphragm of the alkaline water electrolyzer.

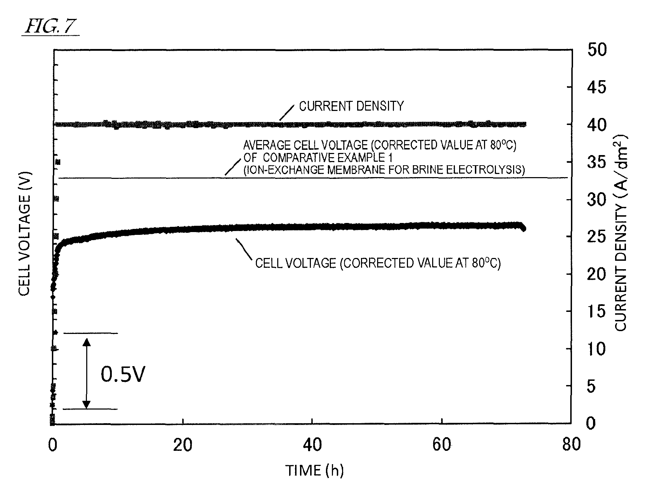

Fig. 6 shows measurement results regarding the cell voltage when the polymer porous membrane according to Reference Example 1 was applied as the diaphragm to the testing apparatus 50, and the water electrolysis was performed for 72 hours. Fig. 7 shows measurement results regarding the cell voltage when the polymer porous membrane according to Reference Example 2 was applied as the diaphragm to the testing apparatus 50, and the water electrolysis was performed for 72 hours. In the graphs of Figs. 6 and 7, a vertical axis shows the cell voltage (V), and a horizontal axis shows the electrolysis time (h). It is clear from Figs. 6 and 7 that when the polymer porous membrane according to each of Reference Examples 1 and 2 is used as the diaphragm, and the alkaline water electrolysis is performed, a relatively low cell voltage, that is, high electrolysis efficiency is maintained for 72 hours.

### Reference Signs List

- 1: membrane forming apparatus
- 2: unwinding drum
- 3, 4, 7, 11: guide roller
- 5: coating unit
- 6: chemical liquid tank
- 8: driving roller
- 9: nip roller
- 10: slitter
- 12: winding drum
- 13: water tank
- 30: electrolysis cell
- 31: anode assembly
- 31a: anode
- 31b: anode frame
- 31c: connecting terminal
- 32: cathode assembly
- 32a: cathode
- 32b: cathode frame
- 32c: connecting terminal
- 32d: elastic body
- 33: diaphragm
- 35: electrolysis tank
- 48: anode chamber
- 49: cathode chamber
- 50: testing apparatus
- 51: electrolytic solution storage tank
- 90: alkaline water electrolysis diaphragm
- 91: polymer porous layer
- 92: organic fiber fabric layer
- 93: mixed layer

## Claims

1. An alkaline water electrolysis diaphragm comprising:
a polymer porous layer containing at least one polymer compound selected from polyether sulfone having a contact angle of 20 to 90° and polysulfone having the contact angle of 20 to 90°; and
an organic fiber fabric layer coupled to the polymer porous layer.

2. The alkaline water electrolysis diaphragm according to claim 1, wherein the polyether sulfone having the contact angle of 20 to 90° is at least one polymer compound selected from the group consisting of polyether sulfone, hydrophilic polyether sulfone, cationic polyether sulfone, and cationic hydrophilic polyether sulfone.

3. The alkaline water electrolysis diaphragm according to claim 1 or 2, wherein the polysulfone having the contact angle of 20 to 90° is at least one polymer compound selected from the group consisting of polysulfone, hydrophilic polysulfone, cationic polysulfone, and cationic hydrophilic polysulfone.

4. The alkaline water electrolysis diaphragm according to claim 1, wherein each of the polyether sulfone having the contact angle of 20 to 90° and the polysulfone having the contact angle of 20 to 90° has a hydrophilic functional group or a hydrophilic graft chain at a rate of 1 to 100% per polymer repeating unit.

5. The alkaline water electrolysis diaphragm according to claim 1, wherein each of the polyether sulfone having the contact angle of 20 to 90° and the polysulfone having the contact angle of 20 to 90° has a cationic functional group at a rate of 1 to 100% per polymer repeating unit.

6. The alkaline water electrolysis diaphragm according to any one of claims 1 to 5, wherein the organic fiber fabric layer is made of organic fiber non-woven fabric having a density of 0.1 to 0.7 g/cm³.

7. An alkaline water electrolyzer comprising:
an electrolysis tank including an anode chamber and a cathode chamber that are defined by the alkaline water electrolysis diaphragm according to any one of claims 1 to 6;
an anode provided in the anode chamber;
a cathode provided in the cathode chamber; and
an elastic body having an electrical conductivity and configured to press the cathode toward the alkaline water electrolysis diaphragm such that the anode, the alkaline water electrolysis diaphragm, and the cathode tightly contact one another.

8. A method of manufacturing an alkaline water electrolysis diaphragm,
the method comprising:
adding at least one polymer compound selected from polyether sulfone having a contact angle of 20 to 90° and polysulfone having the contact angle of 20 to 90° to an organic solvent at a concentration of 12.5 to 30 wt.% to obtain a membrane forming solution;
applying the membrane forming solution to organic fiber fabric; and
performing phase separation of the membrane forming solution.

9. The method according to claim 8, wherein the polyether sulfone having the contact angle of 20 to 90° is at least one polymer compound selected from the group consisting of polyether sulfone, hydrophilic polyether sulfone, cationic polyether sulfone, and cationic hydrophilic polyether sulfone.

10. The method according to claim 8 or 9, wherein the polysulfone having the contact angle of 20 to 90° is at least one polymer compound selected from the group consisting of polysulfone, hydrophilic polysulfone, cationic polysulfone, and cationic hydrophilic polysulfone.

11. The method according to claim 8, wherein each of the polyether sulfone having the contact angle of 20 to 90° and the polysulfone having the contact angle of 20 to 90° has a hydrophilic functional group or a hydrophilic graft chain at a rate of 1 to 100% per polymer repeating unit.

12. The method according to claim 8, wherein each of the polyether sulfone having the contact angle of 20 to 90° and the polysulfone having the contact angle of 20 to 90° has a cationic functional group at a rate of 1 to 100% per polymer repeating unit.

13. The method according to any one of claims 8 to 12, wherein the organic fiber fabric is organic fiber non-woven fabric having a density of 0.1 to 0.7 g/cm³.

14. The method according to any one of claims 8 to 13, wherein the organic solvent is selected from the group consisting of dimethyl sulfoxide (DMSO), N-methyl-2-pyrrolidone (NMP), dimethylformamide (DMF), dimethylacetamide (DMAc), and a mixture of these.
